# EUROPÄISCHE PATENTSCHRIFT

(11) **EP 1 438 642 B1**
(45) Veröffentlichungstag und Bekanntmachung des Hinweises auf die Patenterteilung: **08.06.2005**
(21) Anmeldenummer: 02782728.6
(22) Anmeldetag: 15.10.2002
(51) Int. Cl.: G05B 23/02

(54) **SYSTEM UND VERFAHREN ZUR DYNAMISCHEN DARSTELLUNG DES IST-ZUSTANDES EINES AUFTRAGES IN RELATION ZU EINEM ZIELZUSTAND**
SYSTEM AND METHOD FOR THE DYNAMIC REPRESENTATION OF THE ACTUAL STATE OF A TASK IN RELATION TO A TARGET STATE
SYSTEME ET PROCEDE POUR REPRESENTER DE FACON DYNAMIQUE L'ETAT ACTUEL D'UNE TACHE EN RELATION AVEC UN ETAT CIBLE

(30) Priorität: 22.10.2001 DE 10151938
(43) Veröffentlichungstag der Anmeldung: 21.07.2004
(73) Patentinhaber: SIEMENS AKTIENGESELLSCHAFT, 80333 München (DE)
(72) Erfinder: GEGNER, Günter, 90471 Nürnberg (DE)
(86) Internationale Anmeldenummer: PCT/DE2002/003899
(87) Internationale Veröffentlichungsnummer: WO 2003/038538

(56) Entgegenhaltungen:
- WO-A-00/17773
- WO-A-01/57606
- DE-A- 19 825 733
- US-A- 5 914 875

## Beschreibung

Die Erfindung betrifft System und Verfahren zur dynamischen Darstellung des Ist-Zustandes eines Auftrages.

Ein derartiges System kommt beispielsweise im Bereich der Fertigungs- und/oder Prozessautomatisierung zum Einsatz. Dabei wird häufig eine graphische und optische Darstellung von Auftragszuständen, beispielsweise in Form von Balkendiagrammen über einen Leitstand benötigt. Derartige Darstellungsarten sind häufig mit einer Vielzahl von Informationen versehen und somit insbesondere für ungeübte Anwender nicht allzu übersichtlich.

Aus der WO 00/17773 A2 ist ein System zur Darstellung von logistischen Informationen in Verbindung mit einer Beschaffungskette bekannt. Das System umfasst ein Darstellungsinterface, über das eine Vielzahl von Icons und eine Vielzahl von Links darstellbar ist. Die Icons repräsentieren dabei Einheiten eines Auftrages oder einer Beschaffungskette.

Der Erfindung liegt die Aufgabe zugrunde, ein System bzw. Verfahren für eine übersichtliche Darstellung von Auftragszuständen anzugeben.

Diese Aufgabe wird durch ein System sowie durch ein Verfahren mit den in den Ansprüchen 1 und 8 angegebenen Merkmalen gelöst.

Der Erfindung liegt die Erkenntnis zugrunde, dass die Darstellung von Ist-Zuständen einer Auftragskette, die beispielsweise bestimmte Bearbeitungs- oder Logistikzustände kennzeichnet, bei einer Darstellung lediglich in Form von Balkendiagrammen oder in reiner Textdarstellung vor allem für ungeübte Anwender unübersichtlich wird, eine wesentlich übersichtlichere und aussagekräftigere Darstellungsform wird dadurch erreicht, dass die jeweiligen Ist-Zustände eines Auftrages bzw. einer Auftragskette immer bezogen auf einen Zielzustand dargestellt werden. Für eine derartige Darstellung benötigt das System zunächst die Eingabe von den Zielinformationsdaten. Diese Zielinformationsdaten werden in einem Speicher der Rechnereinrichtung gespeichert. Aus einem realen Prozess bzw. einer realen Fertigungssituation werden die Ist-Informationsdaten mit Hilfe der Datenerfassungsvorrichtung erfasst und auf den Visualisierungsmitteln dargestellt. Darüber hinaus erfolgt ein mit Hilfe einer Auswerteeinrichtung eine Auswertung der Ist-Informationsdaten in Relation zu den vorgegebenen Zielinformationsdaten. Die Ergebnisse dieser Auswertung werden wiederum in Form der jeweils aktuellen Ist-Zustände der Aufträge in Relation zu den jeweiligen Zielzuständen visualisiert. Insgesamt ergibt sich eine wesentlich verbesserte Übersichtlichkeit der Darstellung, die auch eine direkte Konflikterkennung, d.h. eine Kollision von zwei oder mehreren Aufträgen erkennen lässt.

Der Informationsgehalt für den Anwender kann dadurch nochmals erhöht werden, dass die Auswertevorrichtung zur Auswertung der Ist-Informationsdaten und der Zielinformationsdaten in der Weise vorgesehen ist, dass hieraus den jeweiligen Auftragszustand kennzeichnende Zusatzinformationen ermittelt und mittels der Visualisierungsmittel dargestellt werden.

Eine auch für ungeübte Anwender einfach verständliche Darstellung der Auftragszustände kann in der Weise erzielt werden, dass das System zur Ermittlung und Darstellung eines visuellen Bezugs zu einem Bearbeitungs-, Fertigungs- und/oder Logistikziel eines Auftrages vorgesehen ist.

Ein vorteilhafter Anwendungsfall des Systems besteht darin, dass das System mit einem MES-, MIS, und/oder HMI-System koppelbar oder in ein derartiges System integriert ist.

Eine bedarfsgerechte Darstellungsform kann dadurch erzielt werden, dass das System Mittel zur Auswahl unterschiedlicher Ebenen von Ist-Zuständen, insbesondere bezüglich einzelner Aufträge, einer oder mehrerer Gruppen von Aufträgen, einzelner Abteilungen und/oder Maschinen eines Prozesses und/oder einer Fertigung und/oder einer Gesamtdarstellung aller Aufträge eines Prozesses und/oder einer Fertigung aufweist.

Eine graphische Visualisierung von entstehenden Auftragskonflikten auch vorausschauend kann dadurch sichergestellt werden, dass das System Mittel zur Visualisierung von Konflikten von Aufträgen aufweist.

Die Übersichtlichkeit insbesondere bei komplexen Darstellungsformen kann dadurch weiter verbessert werden, dass die Visualisierungseinrichtung zur dreidimensionalen Darstellung der Bearbeitungszustände der Aufträge vorgesehen sind.

Im folgenden wird die Erfindung anhand der in den Figuren dargestellten Ausführungsbeispiele näher beschrieben und erläutert.

Es zeigen:
- FIG 1: ein Blockschaltbild eines Ausführungsbeispiels eines Systems zur dynamischen Darstellung des Ist-Zustandes eines Auftrages in Relation zu einem Zielzustand,
- FIG 2: eine beispielhafte graphische Darstellung einer Auftragskette mit in Relation zu einem Zielzustand dargestellten Aufträgen und
- FIG 3: eine beispielhafte graphische Darstellung von Aufträgen, die mit Zusatzinformationen angereichert sind.

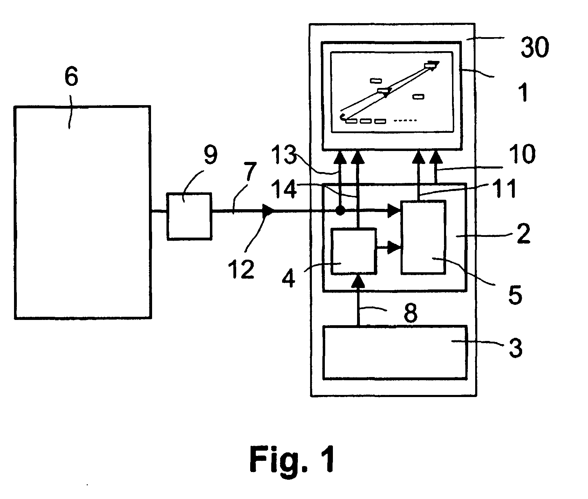

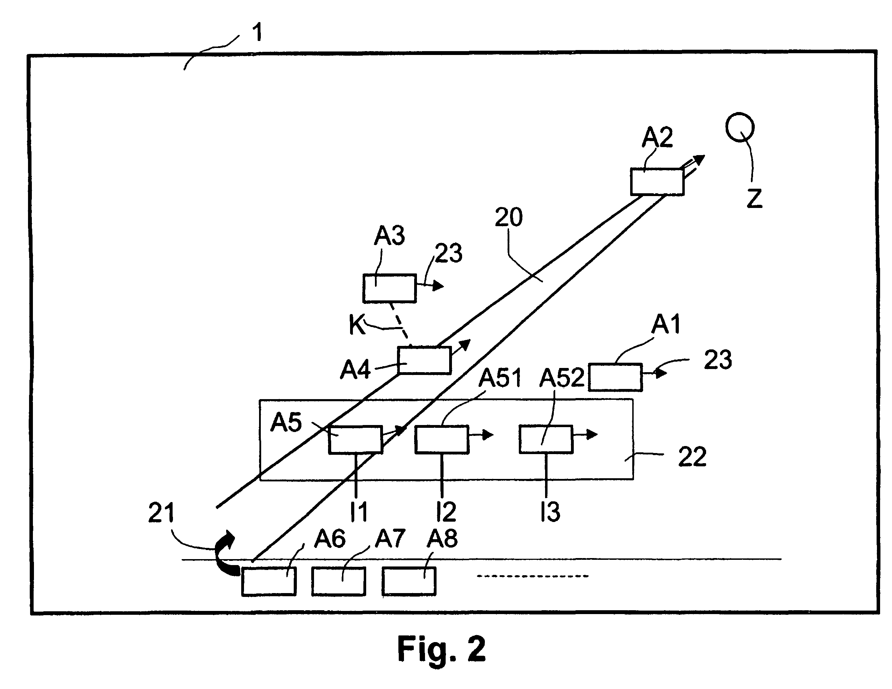

FIG 1 zeigt ein schematisches Blockschaltbild eines Ausführungsbeispiels eines Systems 30 zur dynamischen Darstellung der Ist-Zustände von Aufträgen in Relation zu einem Zielzustand bzw. zu mehreren Zielzuständen. Das System 30 umfasst eine Rechnereinrichtung 2, eine Visualisierungseinrichtung 1 sowie eine Eingabevorrichtung 3. Über eine Datenverbindung 7 ist das System 30 mit einen Fertigungssystem 6 oder einen Prozess gekoppelt. Mit Hilfe einer Datenerfassungsvorrichtung 9 werden Ist-Informationsdaten 12 aus dem Prozess bzw. aus dem Fertigungssystem 6 erfasst und an die Datenverarbeitungseinrichtung 2 weitergeleitet. Die Datenverarbeitungsvorrichtung umfasst einen Speicher zur Speicherung von Zielinformationen 8, die über die Eingabevorrichtung 3 in den Speicher eingegeben werden oder in andere bekannter Weise in den Speicher 6 eingelesen werden. Die Datenverarbeitungsvorrichtung umfasst weiter eine Auswertevorrichtung 5 zur Auswertung der Ist-Informationsdaten 7 sowie der im Speicher 4 gespeicherten Zielinformationsdaten 8. Mit Hilfe der Pfeile 10,11,13,14 zwischen der Datenverarbeitungsvorrichtung 2 und der Visualisierungseinrichtung 1 ist angedeutet, dass entsprechende Daten von der Datenverarbeitungsvorrichtung 2 auf dem Bildschirm 1 dargestellt werden, wie im Zusammenhang insbesondere mit FIG 2 noch näher erläutert wird.

Die Besonderheit des in FIG 1 dargestellten Systems besteht vor allem darin, dass die Datenverarbeitungsvorrichtung 2 die erfassten Ist-Informationsdaten 12 in der Auswerteeinrichtung 5 in Relation zu den im Speicher 4 gespeicherten Zielinformationsdaten 8 auswertet und die aus diesen Auswertungen gewonnenen Informationen an die Visualisierungseinrichtung 1 übermittelt. Die Visualisierungseinrichtung 1 dient dabei einer zielorientierten Darstellung der jeweiligen Ist-Zustände der Auftragsdaten. Insgesamt ergibt sich hierdurch ein visueller Bezug zu einen Bearbeitungs-, Fertigungs- oder Logistikziel. Das Ziel kann dabei jeweils Abschluss der Gesamtbearbeitung oder einer Teilbearbeitung oder eines Arbeitsganges sein. Mit Hilfe der zielorientierten Darstellung ergibt sich eine höhere Übersichtlichkeit mit der Möglichkeit zu einer direkten Konflikterkennung. Die Visualisierungseinrichtung 1 dient dabei einer dynamischen Darstellung der Ist-Informationsdaten sowie der entsprechenden Zielinformationsdaten, so dass sich eine aktuelle Auftragssituation schnell erkennen lässt und gegebenenfalls in den Prozess oder die zugrundeliegende Fertigung eingegriffen werden kann.

FIG 2 zeigt eine beispielhafte graphische Darstellung einer Auftragskette aus Aufträgen A1...A8 jeweils in Relation zu einem Zielzustand Z. Die Aufträge A6,A7,A8 befinden sich dabei als sogenannte wartende Aufträge vor dem durch einen Pfeil 21 gekennzeichneten Eintritt in einen Zielkorridor 20, der in FIG 2 schraffiert dargestellt ist. Im Zielkorridor 20 befinden sich Aufträge A2,A4,A5, während sich die Aufträge A1,A3 außerhalb des Zielkorridors 20 befinden. Jedem Auftrag A1...A8 ist bei den in FIG 2 dargestellten Ausführungsbeispiel eine Zusatzinformation 23 zugeordnet, die als Vorschau-Symbol die "Richtung" der weiteren Bearbeitung kennzeichnet. Mit Hilfe der an den Ziel Z orientierten Darstellungsform auf dem Bildschirm 1 ergibt sich somit auch für einen ungeübten Betrachter eine übersichtliche Darstellung der jeweiligen Auftragsstatien A1..An. So kann der Betrachter und Anwender anhand der aktuellen Auftragsstati der Aufträge A3,A4 erkennen, dass sich eine Kollisionssituation ergibt. Eine derartige Kollisionssituation kann jedoch auch bereits automatisiert beispielsweise in Form einer gestrichelten Linie K. dem Anwender visualisiert werden. Die Übersichtlichkeit kann dazu auch weiter erhöht werden, dass kollisionsgefährdete Aufträge, z.B. im Ausführungsbeispiel der FIG 2 die Aufträge A3,A4 beispielsweise in auffälligen Farben, insbesondere rot oder mit zusätzlichen Warnhinweisen etc. versehen werden.

FIG 2 zeigt beispielhaft ein schraffiertes Feld 22, welches die dynamische Darstellungsform der Aufträge veranschaulichen soll. Im schraffiert gezeichneten Feld 22 befindet sich der Auftrag A5 jeweils zu unterschiedlichen Zeitpunkten, was durch die unterschiedlichen Auftragsbezeichnungen A5,A51,A52 sowie durch unterschiedliche Ist-Zustände 11,12,13 symbolisiert ist. Im Ist-Zustand I1 zeigt der Auftrag A5 bereits ein leichtes Abweichen aus dem Zielkorridor 20. Dies ist insbesondere durch die Zusatzinformation des Pfeils 23 gekennzeichnet. Insgesamt ergibt sich durch den direkten Zielbezug und durch die dynamische Darstellung der Ist-Zustände I1,I2,I3 ein aussagekräftiges Layout auch für ungeübte Anwender.

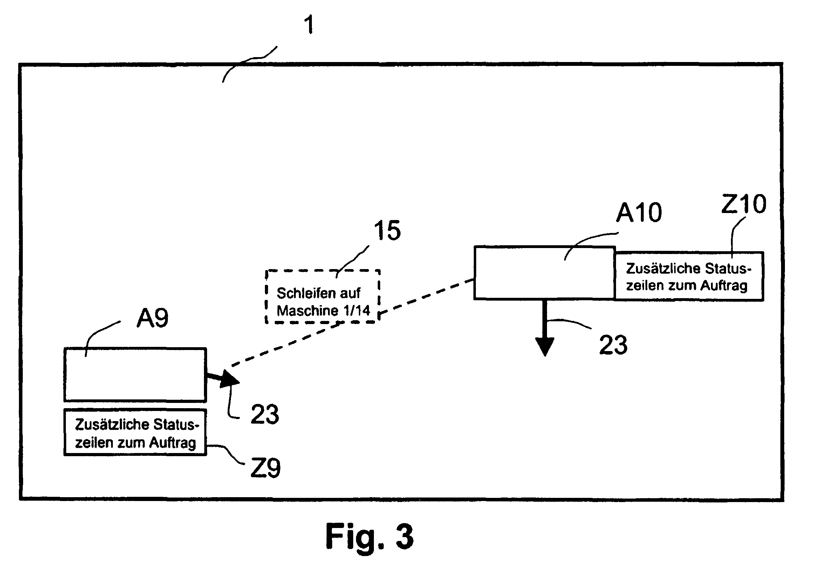

FIG 3 zeigt eine beispielhafte graphische Darstellung von Aufträgen die jeweils mit Zusatzinformationen angereichert sind. Die Darstellung erfolgt wiederum in einen Bildschirmfenster 1, beispielhaft dargestellt sind zwei Aufträge A9,A10, mit Hilfe der bereits im Zusammenhang mit FIG 2 erläuterten Zeile 23 erfolgt wiederum eine Visualisierung der aktuellen "Richtung" der weiteren Bearbeitung, d.h. eine Visualisierung des dynamischen Bearbeitungszustandes. Bei den in FIG 3 dargestellten Ausführungsbeispiel sind darüber hinaus weitere Zusatzdatenfelder Z9,Z10 vorgesehen, die jeweils zusätzliche Statuszeilen zum jeweiligen Auftrag A9,A10 beinhalten. Weiter ist ein Kollisionsdatenfeld 15 vorhanden, welches Kollisionshinweise enthält. Die Darstellungsform der Auftrags-Icons A9,A10 kann zur Verbesserung der Übersichtlichkeit in unterschiedlichen Farben erfolgen, wobei durch die Farbinformationen bereits Aussagen über den Bearbeitungszustand können. So kann durch die Farbe grün, beispielsweise die Aussage verbunden sein, dass sich ein Auftrag im Plan befindet, die Farbe gelb wird beispielsweise ein verzögerter Auftrag visualisiert, während durch rot ein Stillstand des Auftrags dargestellt wird. Mit Hilfe der in den FIG 2 und 3 gezeigten Darstellungsarten lässt sich somit bei Bedarf eine echte und sinnvolle dreidimensionale Informationsaufbereitung erreichen, wobei bei einer 3D-Darstellung und Erkennung beispielsweise eine entsprechende 3D-Brille verwendet werden kann.

Zusammenfassend betrifft die Erfindung somit ein System und Verfahren zur dynamischen Darstellung des Ist-Zustandes I1..In eines Auftrages A1..An. Für eine übersichtliche und aussagekräftige Darstellung eines Auftrages A1..An wird vorgeschlagen, den Bearbeitungszustand als Ist-Zustand I1..In eines Auftrages A1..An in der Weise darzustellen, dass die Darstellung als dynamische Ist-Zustand-Darstellung jeweils in Relation zu einem Zielzustand Z1..Zn erfolgt. Insgesamt ergibt sich für den Anwender somit ein visueller Bezug beispielsweise zu einem Bearbeitungs-, Fertigungs- und/oder Logistikziel. Die Übersichtlichkeit kann weiter dadurch erhöht werden, dass den Ist-Zuständen der Aufträge A1..An den Auftragszustand kennzeichnende Zusatzinformationen zugeordnet sind.

## Patentansprüche

1. System zur dynamischen Darstellung des Ist-Zustandes (I1..In) mindestens eines Auftrages (A1..An) eines Prozesses und/oder einer Fertigung insbesondere im Bereich der Fertigungs- und/oder Prozessautomatisierung
• mit Eingabemitteln (3) zur Eingabe von einem Zielzustand (Z1..Zn) mindestens eines Auftrages (A1..An) zugeordneten Zielinformationsdaten (8) in einen Speicher (4) einer Rechnereinrichtung (2),
• mit mindestens einer Datenerfassungsvorrichtung (9) zur Erfassung von Ist-Informationsdaten (7) eines Prozesses (6) und/oder einer Fertigung (6),
• mit einer Auswerteeinrichtung (5) zur Auswertung der Ist-Informationsdaten (7) in Relation zu vorgebaren Zielinformationsdaten (8) und
• mit Visualisierungsmitteln (1) zur Visualisierung des Bearbeitungszustandes eines Auftrages (A1..An) in der Weise, dass die aus den vorgebbaren Ist-Informationsdaten (7) abgeleiteten Ist-Zustände (I1..In) eines Auftrages (A1..An) jeweils dynamisch in Relation zu dem Zielzustand (Z1..Zn) dargestellt werden.

2. System nach Anspruch 1,
**dadurch gekennzeichnet,**
**dass** die Auswertevorrichtung (5) zur Auswertung der Ist-Informationsdaten (7) und der Zielinformationsdaten (8) in der Weise vorgesehen ist, dass hieraus den jeweiligen Auftragszustand kennzeichnende Zusatzinformationen (10) ermittelt und mittels der Visualisierungsmittel (1) dargestellt werden.

3. System nach einem der Ansprüche 1 oder 2,
**dadurch gekennzeichnet**,
das System zur Ermittlung und Darstellung eines visuellen Bezugs zu einem Bearbeitungs-, Fertigungs- und/oder Logistikziel (Z1..Zn) eines Auftrages (A1..An) vorgesehen ist.

4. System nach einem der Ansprüche 1 bis 3,
**dadurch gekennzeichnet,**
**dass** das System mit einem MES-, MIS, und/oder HMI-System koppelbar oder in ein derartiges System integriert ist.

5. System nach einem der Ansprüche 1 bis 4,
**dadurch gekennzeichnet,**
**dass** das System Mittel zur Auswahl unterschiedlicher Ebenen von Ist-Zuständen (I1..In), insbesondere bezüglich
• einzelner Aufträge,
• einer oder mehrerer Gruppen von Aufträgen,
• einzelner Abteilungen und/oder Maschinen eines Prozesses und/oder einer Fertigung,
• einer Gesamtdarstellung aller Aufträge eines Prozesses und/oder einer Fertigung.
Aufweist.

6. System nach einem der Ansprüche 1 bis 5,
**dadurch gekennzeichnet,**
**dass** das System Mittel zur Visualisierung von Konflikten von Aufträgen (A1..An) aufweist.

7. System nach einem der Ansprüche 1 bis 6,
**dadurch gekennzeichnet,**
**dass** die Visualisierungseinrichtung (1) zur dreidimensionalen Darstellung der Bearbeitungszustände der Aufträge (A1..An) vorgesehen sind.

8. Verfahren zur dynamischen Darstellung des Ist-Zustandes (I1..In) mindestens eines Auftrages (A1..An) eines Prozesses und/oder einer Fertigung insbesondere im Bereich der Fertigungs- und/oder Prozessautomatisierung, bei dem einem Zielzustand (Z1..Zn) mindestens eines Auftrages (A1..An) zugeordnete Zielinformationsdaten (8) in einen Speicher (4) einer Rechnereinrichtung (2) eingegeben werden, bei dem Ist-Informationsdaten (7) eines Prozesses (6) und/oder einer Fertigung (6) erfasst werden, bei dem die Ist-Informationsdaten (7) in Relation zu vorgebaren Zielinformationsdaten (8) ausgewertet werden und bei dem der Bearbeitungszustand mindestens eines Auftrages (A1..An) in der Weise erfolgt, dass die aus den vorgebbaren Ist-Informationsdaten (7) abgeleiteten Ist-Zustände (I1..In) eines Auftrages (A1..An) jeweils dynamisch in Relation zu einem Zielzustand (Z1..Zn) dargestellt werden.

9. Verfahren nach Anspruch 8,
**dadurch gekennzeichnet,**
**dass** die Ist-Informationsdaten (7) und die Zielinformationsdaten (8) in der Weise ausgewertet werden, dass hieraus den jeweiligen Auftragszustand kennzeichnende Zusatzinformationen (10) ermittelt und mittels der Visualisierungsmittel (1) dargestellt werden.

10. Verfahren nach einem der Ansprüche 8 oder 9,
**dadurch gekennzeichnet,**
**dass** das Verfahren zur Ermittlung und Darstellung eines visuellen Bezugs zu einem Bearbeitungs-, Fertigungs- und/oder Logistikziel (Z1..Zn) eines Auftrages (A1..An) vorgesehen ist.

11. Verfahren nach einem der Ansprüche 8 bis 10,
**dadurch gekennzeichnet,**
**dass** das Verfahren im Zusammenhang mit einem MES-, MIS, und/oder HMI-System angewendet wird.

12. Verfahren nach einem der Ansprüche 8 bis 11, **dadurch gekennzeichnet,**
**dass** unterschiedlicher Ebenen von Ist-Zuständen (I1..In), insbesondere bezüglich
• einzelner Aufträge,
• einer oder mehrerer Gruppen von Aufträgen,
• einzelner Abteilungen und/oder Maschinen eines Prozesses und/oder einer Fertigung,
• einer Gesamtdarstellung aller Aufträge eines Prozesses und/oder einer Fertigung
auswählbar sind.

13. Verfahren nach einem der Ansprüche 8 bis 12,
**dadurch gekennzeichnet,**
**dass** Konflikte von Aufträgen (A1..An) visualisiert werden.

14. Verfahren nach einem der Ansprüche 8 bis 13,
**dadurch gekennzeichnet,**
**dass** Bearbeitungszustände der Aufträge (A1..An) für eine dreidimensionale Darstellung aufbereitet werden.

## Claims

1. System for dynamically displaying the actual state (I1..In) of at least one task (A1..An) of a process and/or a production system, in particular in the field of production and/or process automation
• having entry means (3) for entering target information data (8) assigned to a target state (Z1..Zn) of at least one task (A1..An) in a memory (4) of a computer device (2),
• having at least one data acquisition facility (9) for acquiring actual information data (7) of a process (6) and/or a production system (6),
• having an evaluation device (5) for analysing the actual information data (7) in relation to specifiable target information data (8) and
• having visualisation means (1) for visualising the processing state of a task (A1..An) in such a way that the actual states (I1..In) of a task (A1..An) derived from the specifiable actual information data (7) are in each case dynamically displayed in relation to a target state (Z1..Zn).

2. System according to Claim 1,
**characterised in that**,
the evaluation device (5) for analysing the actual information data (7) and the target information data (8) is designed in such a way that additional information (10) **characterising** the relevant task state is determined therefrom and displayed using the visualisation means (1).

3. System according to one of Claims 1 or 2,
**characterised in that**,
the system is designed to determine and display a visual reference to a processing, production and/or logistics target (Z1..Zn) of a task (A1..An).

4. System according to one of Claims 1 to 3,
**characterised in that**,
the system can be linked to an MES, MIS, and/or HMI system or incorporated in a system of this kind.

5. System according to one of Claims 1 to 4,
**characterised in that**,
the system has means of selecting different levels of actual states (I1..In), particularly in respect of
• individual tasks,
• one or more groups of tasks,
• individual departments and/or machines of a process and/or production system,
• a general representation of all the tasks of a process and/or production system.

6. System according to one of Claims 1 to 5,
**characterised in that**,
the system has means of visualising conflicts of tasks (A1..An).

7. System according to one of Claims 1 to 6,
**characterised in that**,
the visualisation device (1) is designed to display the processing states of the tasks (A1..An) three-dimensionally.

8. Method for dynamically displaying the actual state (I1..In) of at least one task (A1..An) in a process and/or a production system, in particular in the field of production and/or process automation, wherein target information data (8) assigned to a target state (Z1..Zn) of at least one task (A1..An) is entered in a memory (4) of a computer device (2), wherein actual information data (7) of a process (6) and/or production system (6) is acquired, wherein the actual information data (7) is evaluated in relation to specifiable target information data (8) and wherein the processing state of at least one task (A1..An) is represented in such a way that the actual states (I1..In) of a task (A1..An) derived from the specifiable actual information data (7) are dynamically displayed in relation to a target state (Z1..Zn) in each case.

9. Method according to Claim 8,
**characterised in that**,
the actual information data (7) and the target information data (8) are analysed in such a way that additional information (10) **characterising** the relevant task state is determined therefrom and displayed using the visualisation means (1).

10. Method according to one of Claims 8 or 9,
**characterised in that**,
the method is designed to determine and display a visual reference to a processing, production and/or logistics target (Z1..Zn) of a task (A1..An).

11. Method according to one of Claims 8 to 10,
**characterised in that**,
the method is used in conjunction with an MES, MIS, and/or HMI system.

12. Method according to one of Claims 8 to 11,
**characterised in that**,
different levels of actual states (I1..In) can be selected, particularly in respect of
• individual tasks,
• one or more groups of tasks,
• individual departments and/or machines of a process and/or production system,
• a general representation of all the tasks of a process and/or production system.

13. Method according to one of Claims 8 to 12,
**characterised in that**.
conflicts of tasks (A1..An) are visualised.

14. Method according to one of Claims 8 to 13,
**characterised in that**,
processing states of the tasks (A1..An) are conditioned for three-dimensional display.

## Revendications

1. Système pour la représentation dynamique de l'état réel (I1 à In) d'au moins une tâche (A1 à An) d'un processus et/ou d'une fabrication notamment dans le domaine de l'automatisation de fabrication et/ou de processus,
• comprenant des moyens d'entrée (3) pour l'entrée de données d'informations visées (8) associées à un état visé (Z1 à Zn) d'au moins une tâche (A1 à An) dans une mémoire (4) d'un dispositif informatique (2),
• comprenant au moins un dispositif d'acquisition de données (9) pour l'acquisition de données d'informations réelles (7) d'un processus (6) et/ou d'une fabrication (6),
• comprenant un dispositif d'évaluation (5) pour l'évaluation des données d'informations réelles (7) en relation avec des données d'informations visées (8) pouvant être prescrites, et
• comprenant des moyens de visualisation (1) pour la visualisation de l'état de traitement d'une tâche (A1 à An) de telle sorte que les états réels (I1 à In) d'une tâche (A1 à An) qui sont déduits des données d'informations réelles (7) pouvant être prescrites sont représentés à chaque fois de manière dynamique en relation avec l'état visé (Z1 à Zn).

2. Système selon la revendication 1,
**caractérisé par le fait que** le dispositif d'évaluation (5) est prévu pour l'évaluation des données d'informations réelles (7) et des données d'informations visées (8) de manière à déterminer à partir de là des informations supplémentaires (10) caractérisant l'état de tâche respectif et à les représenter avec le moyen de visualisation (1).

3. Système selon l'une des revendications 1 ou 2,
**caractérisé par le fait que** le système est prévu pour la détermination et la représentation d'une relation visuelle avec un objectif de traitement, de fabrication et/ou de logistique (Z1 à Zn) d'une tâche (A1 à An).

4. Système selon l'une des revendications 1 à 3,
**caractérisé par le fait que** le système peut être couplé avec un système MES, MIS et/ou HMI ou est intégré dans un système de ce type.

5. Système selon l'une des revendications 1 à 4,
**caractérisé par le fait que** le système comporte des moyens pour la sélection de différents niveaux d'états réels (I1 à In), notamment par rapport
• à différentes tâches,
• à un ou plusieurs groupes de tâches,
• à différentes divisions et/ou machines d'un processus et/ou d'une fabrication,
• à une représentation globale de toutes les tâches d'un processus et/ou d'une fabrication.

6. Système selon l'une des revendications 1 à 5,
**caractérisé par le fait que** le système comporte des moyens pour la visualisation de conflits de tâches (A1 à An).

7. Système selon l'une des revendications 1 à 6,
**caractérisé par le fait que** le dispositif de visualisation (1) est prévu pour la représentation en trois dimensions des états de traitement des tâches (A1 à An).

8. Procédé pour la représentation dynamique de l'état réel (I1 à In) d'au moins une tâche (A1 à An) d'un processus et/ou d'une fabrication notamment dans le domaine de l'automatisation de fabrication et/ou de processus, dans lequel on entre des données d'informations visées (8) associées à un état visé (Z1 à Zn) d'au moins une tâche (A1 à An) dans une mémoire (4) d'un dispositif informatique (2), dans lequel on acquiert des données d'informations réelles (7) d'un processus (6) et/ou d'une fabrication (6), dans lequel on évalue les données d'informations réelles (7) en relation avec des données d'informations visées (8) pouvant être prescrites et dans lequel on visualise l'état de traitement d'au moins une tâche (A1 à An) de telle sorte que les états réels (I1 à In) d'une tâche (A1 à An) qui sont déduits des données d'informations réelles (7) pouvant être prescrites sont représentés à chaque fois de manière dynamique en relation avec un état visé (Z1 à Zn).

9. Procédé selon la revendication 8,
**caractérisé par le fait qu'**on évalue les données d'informations réelles (7) et les données d'informations visées (8) de manière à déterminer à partir de là des informations supplémentaires (10) caractérisant l'état de tâche respectif et à les représenter avec le moyen de visualisation (1).

10. Procédé selon l'une des revendications 8 ou 9,
**caractérisé par le fait que** le procédé est prévu pour la détermination et la représentation d'une relation visuelle avec un objectif de traitement, de fabrication et/ou de logistique (Z1 à Zn) d'une tâche (A1 à An).

11. Procédé selon l'une des revendications 8 à 10,
**caractérisé par le fait que** le procédé est appliqué en relation avec un système MES, MIS et/ou HMI.

12. Procédé selon l'une des revendications 8 à 11,
**caractérisé par le fait qu'**on peut sélectionner différents niveaux d'états réels (I1 à In), notamment par rapport
• à différentes tâches,
• à un ou plusieurs groupes de tâches,
• à différentes divisions et/ou machines d'un processus et/ou d'une fabrication,
• à une représentation globale de toutes les tâches d'un processus et/ou d'une fabrication.

13. Procédé selon l'une des revendications 8 à 12,
**caractérisé par le fait qu'**on visualise des conflits entre tâches (A1 à An).

14. Procédé selon l'une des revendications 8 à 13,
**caractérisé par le fait qu'**on prépare des états de traitement des tâches (A1 à An) pour une représentation en trois dimensions.
